# EUROPÄISCHE PATENTSCHRIFT

(11) **EP 0 751 370 B1**
(45) Veröffentlichungstag und Bekanntmachung des Hinweises auf die Patenterteilung: **29.01.2003**
(21) Anmeldenummer: 96109458.8
(22) Anmeldetag: 13.06.1996
(51) Int. Cl.: G01B 11/10, A24C 5/34

(54) **Verfahren und Anordnung zum Messen des Durchmessers eines stabförmigen Artikels der tabakverarbeitenden Industrie**
Procedure and device to measure the diameter of a cylindrical object of the tobacco-processing industry
Dispositif et procédé pour mesurer le diamètre d'un objet cylindrique de l'industrie de tabacs

(30) Priorität: 27.06.1995 DE 19523273
(43) Veröffentlichungstag der Anmeldung: 02.01.1997
(73) Patentinhaber: Hauni Maschinenbau Aktiengesellschaft, 21033 Hamburg (DE)
(72) Erfinder: Hapke, Siegfried, 21502 Geesthacht (DE); Westphal, Uwe, 21481 Lauenburg (DE); Jürgens, Günter, 21035 Hamburg (DE); Schröder, Dierk, Dr., 22399 Hamburg (DE)

(56) Entgegenhaltungen:
- EP-A- 0 359 664
- GB-A- 2 219 395
- US-A- 5 311 291

## Beschreibung

Die Erfindung betrifft ein Verfahren zum Messen des Durchmessers von stabförmigen Artikeln der tabakverarbeitenden Industrie, die während einer Drehung um ihre Längsachse einer optischen Strahlung ausgesetzt werden, wobei die Größe mindestens einer durch die Artikel hervorgerufenen Abschattung der Strahlung während kurzer Zeitintervalle erfasst, in ein elektrisches Messsignal umgesetzt und aus mehreren Messsignalen ein Signal für den Durchmesser der Artikel gebildet wird.

Die Erfindung betrifft außerdem eine Anordnung zum Messen des Durchmessers von stabförmigen Artikeln der tabakverarbeitenden Industrie, mit einer die Artikel um ihre Längsachse drehenden Drehvorrichtung, einer optischen Bestrahlungsvorrichtung zum Bestrahlen der Artikel während ihrer Drehung sowie einer Erfassungsvorrichtung zur Erfassung der Größe mindestens einer von den Artikeln hervorgerufenen Abschattung während eines kurzen Zeitintervalls, zur Umsetzung in ein elektrisches Messsignal und zur Bildung eines dem Mittelwert des Durchmessers entsprechenden Signals.

Unter dem Begriff "stabförmiger Gegenstand der tabakverarbeitenden Industrie" werden verstanden Zigaretten mit und ohne Filter und sonstige Rauchstäbe, Filterstäbe, Zigarillos und Zigarren.

Bei der Herstellung von Zigaretten oder Filterstäben ist der Durchmesser ein wesentliches Qualitätsmerkmal, das bei der Zigaretten- oder Filterherstellung überwacht wird. Hierzu sind unterschiedliche Messverfahren bekannt, z. B. die EP-PS 0 359 664 oder die US-PS 5 311 291. Die Schwierigkeiten genauer Durchmessermessungen liegen darin, dass die Zigaretten oft unrund sind, d. h. die Querschnitte senkrecht zu den Längsachsen weichen mehr oder weniger von der Kreisform ab. Bei den bekannten Durchmessermessverfahren ergeben sich unter solchen Umständen Messfehler, die bei der Erfindung vermieden werden sollen.

Maßnahmen der eingangs bezeichneten Art zur Durchmesserprüfung von Zigaretten sind durch die EP-A-0 359 664 bekanntgeworden, gemäß der Zigaretten aufeinanderfolgend durch eine Prüfeinrichtung in Form eines Laborgerätes hindurchbewegt werden. Dieses Laborgerät kann eingebunden sein in eine Kette weiterer Laborgeräte zur Prüfung anderer Eigenschaften der Zigaretten, wobei die Zigaretten in vertikaler Ausrichtung längsaxial diskontinuierlich diese Kette von Laborgeräten passieren.
Nach der GB-A-2 219 395 ist eine Durchmessermessung bekannt, bei der Zigaretten vor und nach einem Rollvorgang vermessen werden, wobei der Rollvorgang zwischen zwei Messungen dazu dient, die Zigaretten in unregelmäßig unterschiedliche Lagen relativ zu einer Fördertrommel zu verbringen, um Deformationen der Zigaretten zu erkennen.
Die US-A-5 311 291 offenbart die Vermessung einer drehenden, im Raum stillstehenden Zigarette mittels eines Offline-Prüfgerätes, welches eines in einer Kette von weiteren Laborgeräten sein kann.

Die der Erfindung zugrundeliegende Aufgabe besteht darin, eine weitere vorteilhafte und stärker an den Produktionsvorgang gebundene Möglichkeit der Durchmesserbestimmung auch bei unrunden Artikeln der oben genannten Art zu schaffen.

Die Lösung gemäß dem Verfahren der Erfindung besteht darin, dass die Artikel während ihrer Drehung und Strahlungsabtastung kontinuierlich oder diskontinuierlich queraxial gefördert werden, und dass die während der kurzen Zeitintervalle erzeugten Messsignale durch vom Maschinentakt abhängige Erregerimpulse aktiviert werden, so dass die Folge der Messungen nicht von der Maschinengeschwindigkeit abhängt.

Weiterbildungen und weitere Ausgestaltungen des Verfahrens gemäß der Erfindung sind den untergeordneten Verfahrensansprüchen zu entnehmen.

Die eingangs genannte Anordnung ist gekennzeichnet durch die Artikel beim Passieren der Drehvorrichtung kontinuierlich oder diskontinuierlich queraxial transportierende Fördermittel einer Filteransetzmaschine sowie durch mit der Bestrahlungsvorrichtung bzw. der Erfassungsvorrichtung in Wirkverbindung stehende Steuermittel, so dass die Folge der Messungen nicht von der Maschinengeschwindigkeit abhängt.

Weiterbildungen und weitere Ausgestaltungen der Anordnung gemäß der Erfindung sind den untergeordneten Anordnungsansprüchen zu entnehmen.

Die mit der Erfindung verbundenen Vorteile bestehen darin, dass die Durchmesser sehr genau, auch bei unrunden Artikeln, ermittelt werden können. Bei der besonders vorteilhaften Drehung eines Artikels in dem Rollkanal einer Filteransetzmaschine ist ein zusätzlicher Aufwand für das Drehen nicht erforderlich.
Die auf der Produktionsmaschine gewonnenen Messdaten können unmittelbar in der laufenden Produktion zur Überwachung bzw. Korrektur von Produktionsparametern verwertet werden.

In der Zeichnung ist ein Ausführungsbeispiel der Erfindung dargestellt. Es zeigen:
- Figur 1: eine Schaltungsanordnung mit einer optischen Strahlungsquelle zum Erfassen des Durchmessers einer Zigarette,
- Figur 2: den Verlauf einer zur Durchmesserbestimmung erfolgenden Abschattung der optischen Strahlung durch eine Zigarette.

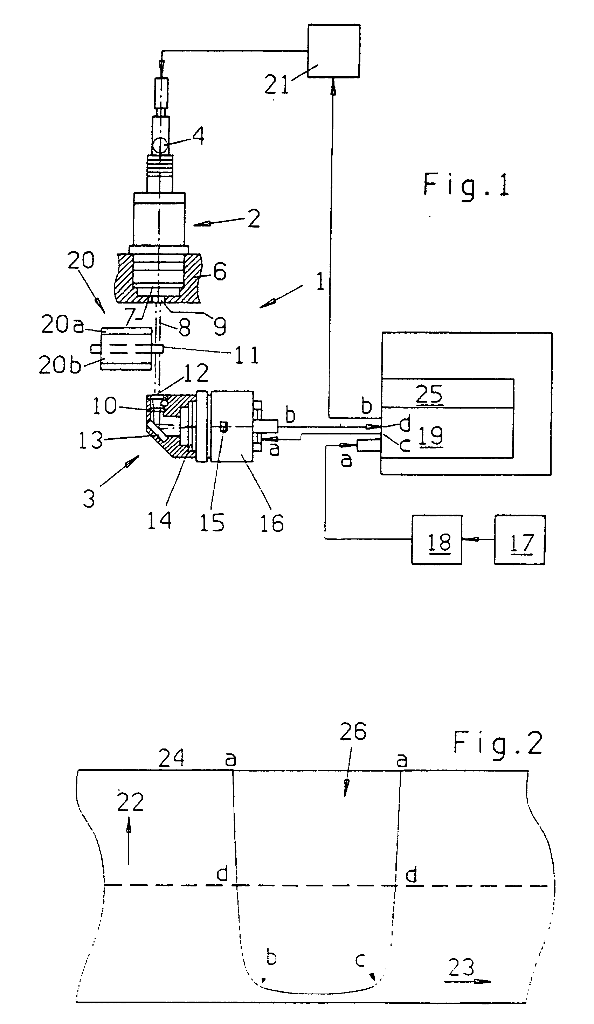

In Figur 1 wird eine Lichtschranke 1 durch einen Lichtsender 2 und einen lichtelektrischen Empfänger 3 realisiert. Der Lichtsender 2 enthält eine Pulslaserdiode 4, zum Beispiel vom Typ LD 65-904nm, die von der Firma Schäfter & Kirchhoff, Celsiusweg 15, 22761 Hamburg, DE, vertrieben wird, und die einen kurzen Laserlichtimpuls abgibt, wenn sie einen elektrischen Erregerimpuls erhält. Das Laserlicht wird von einem Kollimator 6 (z. B. vom Typ SK 9635 der vorgenannten Firma), der eine Kollimatorlinse 7 enthält, in Form eines sich senkrecht zur Zeichenebene erstreckenden telezentrischen Lichtvorhangs 8 (paralleles Licht) durch einen Lichtaustritt 9 abgegeben und an der Zigarette 11 vorbeigeleitet, deren Durchmesser bestimmt werden soll. Das Licht gelangt durch einen Lichteintritt 12 in das Innere des lichtelektrischen Empfängers 3, in dem eine Zylinderlinse 10 den Lichtvorhang 8 bündelt, und ein Umlenkspiegel 13 ihn über einen optischen Filter 14 zu einer CCD-Zeilenkamera 16 (z. B. vom Typ SK 2048JR mit 2048 Pixel) der vorgenannten Firma lenkt. Das Array 15 der Zeilenkamera 16 mit den lichtelektrischen Elementen erstreckt sich senkrecht zur Zeichenebene.

Die Zigarette 11 rollt, wenn sie den Lichtvorhang 8 passiert, um ihre Längsachse in einem nur angedeuten und mit 20 bezeichneten Rollkanal einer Filteransetzmaschine. Derartige Rollkanäle befinden sich in den in der tabakverarbeitenden Industrie weitverbreiteten MAX-Maschinen der Anmelderin und dienen dazu, einen Filterstopfen mit einer Zigarette mittels eines beleimten Verbindungsblättchens zu verbinden. Hierzu wird eine Zigarette nebst Filterstopfen und angeklebtem Verbindungsblättchen von einer Trommel, einer schematisch dargestellten und mit 20a bezeichneten sogenannten Rolltrommel, in den Rollkanal gefördert, der von der Rolltrommel und einer feststehenden Fläche, der sogenannten schematisch dargestellten und mit 20b bezeichneten Gegenrollfläche, gebildet wird. Da der Abstand der Gegenrollfläche von der Rolltrommel geringfügig kleiner ist als der Durchmesser der Zigarette, wird diese während ihrer Förderung auf der Trommel in eine Drehbewegung-versetzt. Während dieser Förderung auf der Rolltrommel und der gleichzeitigen Drehung wird die Zigarette 11 durch den Lichtvorhang 8 bewegt. Einzelheiten einer Rollvorrichtung der vorbeschriebenen Art sind der US-PS 3 176 694 zu entnehmen, die auch zeigt, daß die Zigarette während ihrer Förderung durch den Rollkanal an den Seiten von Rolltrommel und Gegenrollfläche übersteht, so daß sie an ihren Enden durch den Lichtvorhang 8 bewegt werden kann.

Um den zeitlich richtigen Beginn der Diodensteuerung durch elektrische Erregerimpulse sowie deren zeitlich korrekte Folge unabhängig von der Maschinengeschwindigkeit sicherzustellen, gibt ein Taktgeber 17 maschinentaktabhängige Impulse ab, die einer Abtastlogikanordnung 18 zugeführt werden. Die Abtastlogik-Schaltungsanordnung 18 gibt Steuerimpulse an Eingang a einer sogenannten Interface-Karte 19 (z. B. vom Typ SK 9150 [EC] der vorgenannten Firma Schäfter & Kirchhoff), die über einen Ausgang b Erregersignale an eine Leistungsstufe 21 (z. B. vom Typ SK 96088 der vorgenannten Firma) für die Laserdiode 4 abgibt. Die Abtastlogik-Schaltungsanordnung 18 kann so ausgelegt werden, daß sie z. B. zehn Messungen je halbe Drehung der Zigarette 11 bewirkt. Dies bedeutet, daß nach einer Drehung von ca. 16,5° ein Beleuchtungsblitz ausgelöst wird. Die von der Laserdiode 4 abgegebenen Lichtimpulse sind sehr hell und kurz (z. B. im Bereich von 300 nsec) und werden von dem Kollimator 6 in den schmalen Lichtvorhang 8 umgewandelt. Das Lichtfeld gelangt nach Verschmälerung durch Zylinderlinse 10 und Umlenkung durch Spiegel 13 zu dem Array 15 der CCD-Kamera 16. Dabei schattet die Zigarette 11 einen Teil des auf das Array 15 fallenden Lichtes ab. Die Interface-Karte 19 gibt an Ausgang c Ausleseimpulse (z. B. Schiebetakte) an einen Eingang a der CCD-Kamera 16, deren Videosignale als Ausgangssignale von Ausgang b der Kamera zu Eingang d der Interface-Karte geleitet werden.

Das entstehende Signal 22 über die Zeit 23 zeigt Figur 2. Es ist ersichtlich, daß wegen der Abschattung 26 durch die Zigarette 11 das dem Lichtpegel entsprechende elektrische Signal 24 ab a stark abfällt bis auf ein Minimum bei b und danach bei c wieder ansteigt auf den ursprünglichen Wert a. Die Breite der Abschattung (Pegelabfall) wird in einer bestimmten Höhe, bei d, gemessen und gespeichert. Danach wird nach kurzer Zeit, die etwa einer Drehung der Zigarette von 16,5° entspricht, durch einen folgenden Erregerimpuls wieder ein Laserblitz ausgelöst und die Breite der folgenden Abschattung erfaßt und gespeichert, usw.

Nach Erfassung von z. B. zehn Abschattungsbreiten werden diese summiert und bilden, gegebenenfalls nach Division durch die Zahl der Abschattungsbreiten, ein Maß für den Zigarettendurchmesser, der nahezu unabhängig von Verformungen der Zigarette ist. Danach gelangt die gemessene Zigarette aus dem Erfassungsbereich des Lichtvorhangs und die folgende Zigarette gelangt in den Erfassungsbereich des Lichtvorhangs, in dem sie auf die beschriebene Weise während ihrer Drehung bezüglich ihres Durchmessers vermessen wird.

Die Steuerung der vorgenannten Abläufe übernimmt eine Rechenstufe 25.

Nach der Bestimmung der einzelnen Durchmesser einer Zigarette kann durch Vergleich des hochsten und des kleinsten Wertes die maximale Verformung ermittelt werden.

In einem Rollkanal entsprechend Position 20 werden die Artikel kontinuierlich gefördert. Eine diskontinuierliche Förderung im Zusammenhang mit einer Messung, während der die Förderung der Artikel unterbrochen ist, während sie gedreht und vermessen werden, ist gemäß der Erfindung durch eine bewegte Gegenrollfläche 20b erreichbar, deren Bewegungsrichtung der Förderrichtung der Rolltrommel 20a entgegengesetzt ist und deren effektive Geschwindigkeit so groß ist wie die Geschwindigkeit der Rolltrommel. Einzelheiten einer derartigen Fördervorrichtung mit periodischen Stillständen der Förderung sind in der US-PS 4 281 670 enthalten und brauchen daher nicht mehr beschrieben zu werden.

Anstatt, wie zuvor beschrieben, einen einzelnen drehenden Artikel mehrfach kurzzeitig zu belichten, die Größen der Abschattungen zu erfassen und aus entsprechenden Meßsignalen einen für den Durchmesser des Artikels repräsentativen Mittelwert zu bilden, können gemäß einer Variante der Erfindung die Mittelwerte auch aus Meßsignalen gebildet werden, die durch Vermessung mehrerer einzelner Artikel gebildet sind. Hierzu werden die z. B. durch den beschriebenen Rollkanal oder auf die in der US-PS 4 281 670 beschriebene Weise oder auf andere Weise aufeinanderfolgend geförderten und dabei gedrehten Artikel ein oder mehrere Male kurzzeitig beleuchtet, dabei die Größen der Abschattungen erfaßt und entsprechende Meßsignale gebildet. Die Lagen der Artikel beim kurzzeitigen Beleuchten sind dabei jeweils versetzt gegenüber der vorhergehenden Beleuchtung, d. h. die Artikel sind geringfügig gedreht. Dies betrifft auch aufeinanderfolgende Artikel, die z. B. jeweils nur einmal beleuchtet werden. Aus den so gewonnenen Meßsignalen können dann wieder Mittelwerte gebildet werden, die für die Durchmesser der beleuchten Artikel repräsentativ sind. Diese Methode liefert wegen der langsamen Schwankungen der Durchmesser und auch wegen der versetzten Abtastlagen der einzelnen Artikel recht genaue Durchschnittswerte für die Durchmesser.

In dem beschriebenen Beispiel werden die zu vermessenden Artikel einzeln oder mehrfach kurzzeitig beleuchtet, d. h. angeblitzt, wozu sich eine Laserdiode eignet. Es ist aber gemäß einer weiteren Ausgestaltung der Erfindung auch möglich, die drehenden Artikel während der Messung mit einer konstanten Strahlung, vorzugsweise mit Dauerlicht, zu beaufschlagen und nur die Empfängeranordnung, z. B. die Zeilenkamera, nach Art des Verschlusses einer fotografischen Kamera kurzzeitig freizugeben, so daß nur eine sehr kurzzeitige Belichtung stattfindet.

Schließlich können gemäß der Erfindung kurzzeitige Belichtung (Blitzung) und Verschlußfreigabe kombiniert werden.

## Patentansprüche

1. Verfahren zum Messen des Durchmessers von stabförmigen Artikeln der tabakverarbeitenden Industrie, die während einer Drehung um ihre Längsachse einer optischen Strahlung ausgesetzt werden, wobei die Größe mindestens einer durch die Artikel hervorgerufenen Abschattung der Strahlung während kurzer Zeitintervalle erfasst, in ein elektrisches Messsignal umgesetzt und aus mehreren Messsignalen ein Signal für den Durchmesser der Artikel gebildet wird, **dadurch gekennzeichnet, dass** die Artikel (11) während ihrer Drehung und Strahlungsabtastung kontinuierlich oder diskontinuierlich queraxial gefördert werden, und dass die während der kurzen Zeitintervalle erzeugten Messsignale durch vom Maschinentakt abhängige Erregerimpulse aktiviert werden, so dass die Folge der Messungen nicht von der Maschinengeschwindigkeit abhängt.

2. Verfahren nach Anspruch 1, **dadurch gekennzeichnet, dass** während der Drehung eines Artikels die Größe mehrerer durch diesen Artikel hervorgerufener Abschattungen erfasst und in elektrische Messsignale umgesetzt werden, und dass aus mehreren dieser Messsignale ein Signal für den Durchmesser des Artikels gebildet wird.

3. Verfahren nach Anspruch 1, **dadurch gekennzeichnet, dass** während der Drehung eines Artikels die Größe mindestens einer durch diesen Artikel hervorgerufenen Abschattung erfasst wird, dass während der Drehung eines nachfolgend geförderten Artikels die Größe mindestens einer durch diesen Artikel hervorgerufenen Abschattung in einer von der Lage des vorhergehend geförderten Artikels abweichende Lage erfasst wird, dass gegebenenfalls während der Drehung weiterer nachfolgender geförderter Artikel die Größe von jeweils mindestens einer der durch diese Artikel hervorgerufenen Abschattungen in von der Lage der vorhergehend geförderten Artikel abweichenden Lagen erfasst werden, dass die Abschattungen in elektrische Messsignale umgesetzt werden und dass aus den Messsignalen mehrerer Artikel ein Signal für die Durchmesser der Artikel gebildet wird.

4. Verfahren nach einem oder mehreren der vorhergehenden Ansprüche, **dadurch gekennzeichnet, dass** ein Artikel während seiner Drehung mindestens einer kurzzeitigen, vorzugsweise optischen Strahlung ausgesetzt wird, dass die Größe mindestens einer durch den Artikel hervorgerufenen Abschattung oder die Größen der von mehreren durch den Artikel hervorgerufenen Abschattungen erfasst und in ein elektrisches Messsignal umgesetzt wird, und dass aus mehreren von einem oder mehreren Artikeln hervorgerufenen Messsignalen ein Signal für den Durchmesser des Artikels oder mehrerer Artikel gebildet wird.

5. Verfahren nach einem oder mehreren der Ansprüche 1 bis 3, **dadurch gekennzeichnet, dass** ein Artikel während seiner Drehung einer vorzugsweise optischen Strahlung ausgesetzt wird und dass die Größe mindestens einer durch den Artikel hervorgerufenen Abschattung während eines kurzen Zeitintervalls erfasst und in ein elektrisches Messsignal umgesetzt wird, und dass aus mehreren von einem oder mehreren Artikeln hervorgerufenen Messsignalen ein Signal für den Durchmesser des Artikels oder mehrerer Artikel gebildet wird.

6. Verfahren nach Anspruch 2 oder 3, **dadurch gekennzeichnet, dass** der Artikel um seine Längsachse gedreht wird und dass die kurzzeitige Strahlung durch einen Laser, vorzugsweise eine Laserdiode, erzeugt wird.

7. Verfahren nach einem oder mehreren der vorhergehenden Ansprüche, **dadurch gekennzeichnet, dass** die Größen der durch einen oder mehrere Artikel hervorgerufenen Abschattungen von einer Videokamera, vorzugsweise einer Zeilenkamera (CDD-Kamera), erfasst werden.

8. Verfahren nach einem oder mehreren der vorhergehenden Ansprüche, **dadurch gekennzeichnet, dass** aus mehreren Messsignalen für die Größen der von einem oder mehreren Artikeln hervorgerufenen Abschattungen ein einem Mittelwert entsprechendes Signal gebildet wird.

9. Verfahren nach einem oder mehreren der vorhergehenden Ansprüche, **dadurch gekennzeichnet, dass** der Artikel in einem Rollkanal gedreht wird, der durch eine bewegte Fördervorrichtung, insbesondere eine Fördertrommel, und eine stillstehende oder mit kleinerer oder größerer Geschwindigkeit bewegte in einem etwas geringeren Abstand als Artikeldurchmesser angeordnete Fläche gebildet wird, und durch den der Artikel unter Drehung gefördert wird.

10. Verfahren nach einem oder mehreren der vorhergehenden Ansprüche, **dadurch gekennzeichnet, dass** eine bestimmte vorzugsweise die größte Abschattung eines Artikels mit dem Mittelwert der Größen der Abschattungen verglichen und die Abweichung erfasst wird.

11. Anordnung zum Messen des Durchmessers von stabförmigen Artikeln der tabakverarbeitenden Industrie, mit einer die Artikel (11) um ihre Längsachse drehenden Drehvorrichtung (20), einer optischen Bestrahlungsvorrichtung (4) zum Bestrahlen der Artikel während ihrer Drehung sowie einer Erfassungsvorrichtung (16) zur Erfassung der Größe mindestens einer von den Artikeln hervorgerufenen Abschattung (26, 19) während eines kurzen Zeitintervalls, zur Umsetzung in ein elektrisches Messsignal und zur Bildung eines dem Mittelwert des Durchmessers entsprechenden Signals, **gekennzeichnet durch** die Artikel (11) beim Passieren der Drehvorrichtung (20) kontinuierlich oder diskontinuierlich queraxial transportierende Fördermittel (20a) einer Filteransetzmaschine, sowie **durch** mit der Bestrahlungsvorrichtung (4) bzw. der Erfassungsvorrichtung (16) in Wirkverbindung stehende Steuermittel (17, 18), so dass die Folge der Messungen nicht von der Maschinengeschwindigkeit abhängt.

12. Anordnung nach Anspruch 11, **gekennzeichnet durch** eine die Größen mehrerer **durch** einen drehenden Artikel (11) hervorgerufener Abschattungen erfassende Erfassungsvorrichtung (19, 26), deren elektrische Messsignale den Mittelwert des Durchmessers des Artikels bilden.

13. Anordnung nach Anspruch 11, **gekennzeichnet durch** eine die Größe mindestens einer **durch** einen drehenden Artikel hervorgerufenen Abschattung erfassende Erfassungsvorrichtung, die die Größe mindestens einer **durch** einen nachfolgend geförderten drehenden Artikel hervorgerufenen Abschattung in einer von der Lage des vorhergehend geförderten Artikels abweichende Lage erfasst, und die gegebenenfalls die Größen von jeweils mindestens einer der **durch** nachfolgend geförderte Artikel hervorgerufenen Abschattungen in von den Lagen der vorhergehend geförderten Artikel abweichenden Lagen erfasst, deren elektrische Ausgangssignale den Mittelwert der Durchmesser der Artikel bilden.

14. Anordnung nach einem oder mehreren der Ansprüche 11 bis 13, **gekennzeichnet durch** eine kurzzeitig während der Drehung eines Artikels wirkende vorzugsweise optische Bestrahlungsvorrichtung (4.

15. Anordnung nach einem oder mehreren der Ansprüche 11 bis 13, **gekennzeichnet durch** eine einen Artikel während seiner Drehung einer vorzugsweise optischen Strahlung aussetzenden Bestrahlungsvorrichtung und **durch** eine die Größen von mehreren **durch** den Artikel hervorgerufenen Abschattungen oder die Größen mindestens einer jeweils von mehreren Artikeln hervorgerufenen Abschattungen während eines kurzen Zeitintervalls erfassenden Erfassungsvorrichtung, aus deren entsprechenden Messsignalen ein Signal für den Durchmesser des Artikels oder mehrerer Artikel gebildet wird.

16. Anordnung nach einem oder mehreren der Ansprüche 11 bis 15, **gekennzeichnet durch** eine Drehvorrichtung (20) zum Drehen des Artikels um seine Längsachse und **durch** einen Laser (4), vorzugsweise eine Laserdiode, als Bestrahlungsvorrichtung.

17. Anordnung nach einem oder mehreren der Ansprüche 11 bis 16, **gekennzeichnet durch** eine Videokamera, vorzugsweise eine Zeilenkamera (CDD) (16), als Erfassungsvorrichtung für die Größen der Abschattungen.

18. Anordnung nach einem oder mehreren der Ansprüche 11 bis 17, **gekennzeichnet durch** einen Mittelwertbildner für den Größen der Abschattungen entsprechende Messsignale.

19. Anordnung nach einem oder mehreren der Ansprüche 11 bis 18, **gekennzeichnet durch** einen Rollkanal (20) als Drehvorrichtung für die Artikel, der einerseits **durch** eine bewegte Fördervorrichtung (20a) für die Artikel, andererseits **durch** eine stillstehende oder mit kleinerer oder größerer Geschwindigkeit bewegte in einem geringeren Abstand als Artikeldurchmesser angeordnete Fläche (20b) gebildet wird, **durch** den der Artikel unter Drehung gefördert wird.

## Claims

1. A method of measuring the diameter of rod-shaped articles of the tobacco-processing industry, which are exposed to an optical beam while being rotated about their longitudinal axis, wherein the size of at least one beam shadow cast by the articles during short time intervals is recorded and converted into an electrical measuring signal, and a signal for the diameter of the articles is formed from a plurality of measuring signals, **characterised in that** the articles (11) are continuously or intermittently conveyed cross-axially while being rotated and scanned by the beam, and **in that** the measuring signals generated during the short time intervals are activated by exciter pulses dependent upon the machine cycle, with the result that the sequence of the measurements does not depend on the machine speed.

2. A method according to claim 1, **characterised in that** the size of a plurality of shadows cast by an article is recorded during the rotation of this article and is converted into electrical measuring signals, and **in that** a signal for the diameter of the article is formed from a plurality of these measuring signals.

3. A method according to claim 1, **characterised in that** the size of at least one shadow cast by an article is recorded during the rotation of this article, **in that** the size of at least one shadow cast by a succeeding article in a different position from the position of the preceding article is recorded during the rotation of this succeeding article, **in that** the size of at least one of the shadows cast by further succeeding articles in different positions from the position of the preceding articles is optionally recorded during the rotation of these further succeeding articles, **in that** the shadows are converted into electrical measuring signals, and **in that** a signal for the diameters of the articles is formed from the measuring signals of a plurality of articles.

4. A method according to one or more of the preceding claims, **characterised in that** an article is exposed to at least one short-time, preferably optical beam while being rotated, **in that** the size of at least one shadow cast by the article or the sizes of a plurality of shadows cast by the article are recorded and converted into an electrical measuring signal, and **in that** a signal for the diameter of the article or of a plurality of articles is formed from a plurality of measuring signals generated by one or more articles.

5. A method according to one or more of claims 1 to 3, **characterised in that** an article is exposed to a preferably optical beam while being rotated, **in that** the size of at least one shadow cast by the article during a short time interval is recorded and converted into an electrical measuring signal, and **in that** a signal for the diameter of the article or of a plurality of articles is formed from a plurality of measuring signals generated by one or more articles.

6. A method according to claim 2 or 3, **characterised in that** the article is rotated about its longitudinal axis and **in that** the short-time beam is generated by a laser, preferably a laser diode.

7. A method according to one or more of the preceding claims, **characterised in that** the sizes of the shadows cast by one or more articles are recorded by a video camera, preferably a line camera (CCD camera).

8. A method according to one or more of the preceding claims, **characterised in that** a signal corresponding to an average value is formed from a plurality of measuring signals for the sizes of the shadows cast by one or more articles.

9. A method according to one or more of the preceding claims, **characterised in that** the article is rotated in a rolling channel which is formed by a moving conveying device, in particular a conveying drum, and a surface which is stationary or moves at a greater or lesser speed and is arranged at a slightly smaller distance than the diameter of the articles, and through which the rotating article is conveyed.

10. A method according to one or more of the preceding claims, **characterised in that** a specified, preferably the largest shadow of an article is compared with the average value of the sizes of the shadows and the difference is recorded.

11. An arrangement for measuring the diameter of rod-shaped articles of the tobacco-processing industry, comprising a rotation device (20) rotating the articles (11) about their longitudinal axis, an optical illumination device (4) for illuminating the articles during their rotation, and a recording device (16) for recording the size of at least one shadow (26, 19) cast by the articles during a short time interval, for conversion into an electrical measuring signal and for forming a signal corresponding to the average value of the diameter, **characterised by** conveying means (20a) of a filter attachment machine continuously or intermittently conveying the articles (11) cross-axially when they pass through the rotation device (20), and by control means (17, 18) operatively connected to the illumination device (4) and the recording device (16) so that the sequence of the measurements does not depend on the machine speed.

12. An arrangement according to claim 11, **characterised by** a recording device (19, 26) which determines the sizes of a plurality of shadows cast by a rotating article (11), and the electrical measuring signals of which form the average value of the diameter of the article.

13. An arrangement according to claim 11, **characterised by** a recording device which determines the size of at least one shadow cast by a rotating article, which determines the size of at least one shadow cast by a succeeding rotating article in a different position from the position of the preceding article, and which optionally determines the sizes of at least one of the shadows cast by succeeding articles in different positions from the positions of the preceding articles, the electrical output signals of which form the average value of the diameters of the articles.

14. An arrangement according to one or more of claims 11 to 13, **characterised by** a preferably optical illumination device (4) operating for a short time during the rotation of an article.

15. An arrangement according to one or more of claims 11 to 13, **characterised by** an illumination device exposing an article to a preferably optical beam during its rotation, and by a recording device which determines the sizes of a plurality of shadows cast by the article or the sizes of at least one shadow cast by a plurality of articles during a short time interval, and from the corresponding measuring signals of which a signal is formed for the diameter of the article or a plurality of articles.

16. An arrangement according to one or more of-claims 11 to 15, **characterised by** a rotation device (20) for rotating the article about its longitudinal axis, and by a laser (4), preferably a laser diode, serving as an illumination device.

17. An arrangement according to one or more of claims 11 to 16, **characterised by** a video camera, preferably a line camera (CCD) (16), serving as a recording device for the sizes of the shadows.

18. An arrangement according to one or more of claims 11 to 17, **characterised by** an averaging means for measuring signals corresponding to the sizes of the shadows.

19. An arrangement according to one or more of claims 11 to 18, **characterised by** a rolling channel (20) serving as a rotation device for the articles, which is formed on the one hand by a moving conveying device (20a) for the articles and on the other hand by a surface (20b) which is stationary or moves at a greater or lesser speed and is arranged at a smaller distance than the diameter of the articles, and through which the rotating article is conveyed.

## Revendications

1. Procédé pour mesurer le diamètre d'articles en forme de tige de l'industrie de transformation du tabac, lesquels sont exposés pendant une rotation autour de leur axe longitudinal à un rayonnement optique, la taille d'au moins une ombre de masquage du rayonnement, provoquée par les articles, étant alors détectée durant de brefs intervalles de temps et convertie en un signal de mesure électrique, et un signal pour le diamètre des articles étant alors élaboré à partir de plusieurs signaux de mesure, **caractérisé en ce que** les articles (11), pendant leur rotation et leur balayage par le rayonnement, sont transportés, suivant un mouvement continu ou intermittent, dans une direction transversale à leur axe, et **en ce que** les signaux de mesure, produits durant les brefs intervalles de temps, sont activés au moyen d'impulsions d'excitation dépendant de la cadence de la machine, afin que la série des mesures effectuées ne dépende pas de la vitesse de la machine.

2. Procédé selon la revendication 1, **caractérisé en ce que**, pendant la rotation d'un article, les tailles de plusieurs ombres de masquage, provoquées par cet article, sont détectées et converties en des signaux de mesure électriques, et **en ce qu'**à partir de plusieurs de ces signaux de mesure, un signal pour le diamètre de l'article est élaboré.

3. Procédé selon la revendication 1, **caractérisé en ce que**, pendant la rotation d'un article, la taille d'au moins une ombre de masquage provoquée par cet article est détectée, **en ce que** pendant la rotation d'un article transporté à la suite, la taille d'au moins une ombre de masquage provoquée par cet article est détectée dans une position différant de la position de l'article transporté antérieurement, **en ce que**, le cas échéant, pendant la rotation d'autres articles transportés à la suite, la taille d'au moins l'une des ombres de masquage provoquées par chacun de ces articles est détectée dans des positions respectives différant de la position de l'article transporté antérieurement, **en ce que** les ombres de masquage sont converties en des signaux de mesure électriques et **en ce qu'**à partir des signaux de mesure de plusieurs articles, un signal pour le diamètre des articles est élaboré.

4. Procédé selon une ou plusieurs des revendications précédentes, **caractérisé en ce qu'**un article, pendant sa rotation, est exposé à au moins un rayonnement momentané, de préférence optique, **en ce que** la taille d'au moins une ombre de masquage, provoquée par l'article, ou les tailles des ombres de masquage, provoquées par plusieurs articles, sont détectées et converties en un signal de mesure électrique, et **en ce qu'**à partir de plusieurs signaux de mesure engendrés par un ou plusieurs articles, un signal pour le diamètre de l'article ou de plusieurs articles est élaboré.

5. Procédé selon une ou plusieurs des revendications 1 à 3, **caractérisé en ce qu'**un article, pendant sa rotation, est exposé à un rayonnement, de préférence optique, et **en ce que** la taille d'au moins une ombre de masquage, provoquée par l'article, est détectée durant un bref intervalle de temps et convertie en un signal de mesure électrique, et **en ce qu'**à partir de plusieurs signaux de mesure engendrés par un ou plusieurs articles, un signal pour le diamètre de l'article ou de plusieurs articles est élaboré.

6. Procédé selon la revendication 2 ou 3, **caractérisé en ce que** l'article est mis en rotation autour de son axe longitudinal et **en ce que** le rayonnement momentané est produit au moyen d'un laser, de préférence une diode laser.

7. Procédé selon une ou plusieurs des revendications précédentes, **caractérisé en ce que** les tailles des ombres de masquage provoquées par un ou plusieurs articles, sont détectées par une caméra vidéo, de préférence une caméra à balayage de lignes (caméra CCD).

8. Procédé selon une ou plusieurs des revendications précédentes, **caractérisé en ce qu'**à partir de plusieurs signaux de mesure se rapportant aux tailles des ombres de masquage provoquées par un ou plusieurs articles, est élaboré un signal correspondant à une valeur moyenne.

9. Procédé selon une ou plusieurs des revendications précédentes, **caractérisé en ce que** l'article est mis en rotation dans un canal de roulage, qui est formé par un dispositif de transport en mouvement, notamment un tambour transporteur, et une surface immobile ou déplacée à plus faible ou plus grande vitesse et positionnée à une distance légèrement plus petite que le diamètre de l'article, et au moyen duquel l'article est transporté sous rotation.

10. Procédé selon une ou plusieurs des revendications précédentes, **caractérisé en ce qu'**une ombre de masquage déterminée, de préférence l'ombre de masquage la plus grande, due à un article, est comparée à la valeur moyenne des tailles des ombres de masquage et l'écart est détecté.

11. Système de mesure du diamètre d'articles en forme de tige de l'industrie de transformation du tabac, comportant un dispositif de mise en rotation (20) animant les articles (11) d'une rotation autour de leur axe longitudinal, un dispositif optique d'émission de rayonnement (4) destiné à émettre un rayonnement sur les articles pendant leur rotation, ainsi qu'un dispositif de détection (16) destiné à détecter, durant un bref intervalle de temps, la taille d'au moins une ombre de masquage (26, 19) provoquée par les articles, à la convertir en un signal de mesure électrique et à élaborer un signal correspondant à la valeur moyenne du diamètre, **caractérisé par** des moyens de transport (20a) d'une machine de pose de filtres, qui fait avancer les articles (11) suivant un mouvement continu ou intermittent, dans une direction transversale à leur axe, lorsqu'ils franchissent le dispositif de mise en rotation (20), ainsi que par des moyens de commande (17, 18) placés en liaison fonctionnelle avec le dispositif d'émission de rayonnement (4) et, respectivement, le dispositif de détection (16), afin que la série des mesures effectuées ne dépende pas de la vitesse de la machine.

12. Système selon la revendication 11, **caractérisé par** un dispositif de détection (19, 26) détectant les tailles de plusieurs ombres de masquage provoquées par un article (11) mis en rotation, dont les signaux de mesure électriques forment la valeur moyenne du diamètre de l'article.

13. Système selon la revendication 11, **caractérisé par** un dispositif de détection détectant la taille d'au moins une ombre de masquage provoquée par un article mis en rotation, qui détecte la taille d'au moins une ombre de masquage provoquée par un article mis en rotation, transporté à la suite, dans une position différant de la position de l'article transporté antérieurement, et qui, le cas échéant, détecte les tailles d'au moins l'une des ombres de masquage provoquées par chacun des articles transportés à la suite, dans des positions différant des positions des articles transportés antérieurement, dispositif de détection dont les signaux de sortie électriques forment la valeur moyenne des diamètres des articles.

14. Système selon une ou plusieurs des revendications 11 à 13, **caractérisé par** un dispositif d'émission de rayonnement (4), de préférence optique, agissant momentanément pendant la rotation d'un article.

15. Système selon une ou plusieurs des revendications 11 à 13, **caractérisé par** un dispositif d'émission de rayonnement exposant un article à un rayonnement, de préférence optique, pendant sa rotation, et par un dispositif de détection qui détecte, durant un bref intervalle de temps, les tailles de plusieurs ombres de masquage, provoquées par l'article, ou les tailles d'au moins l'une des ombres provoquées par chacun de plusieurs articles, et à partir des signaux de mesure correspondants duquel, un signal pour le diamètre de l'article ou de plusieurs articles est élaboré.

16. Système selon une ou plusieurs des revendications 11 à 15, **caractérisé par** un dispositif de mise en rotation (20) destiné à mettre en rotation l'article autour de son axe longitudinal et par un laser (4), de préférence une diode laser, faisant office de dispositif d'émission de rayonnement.

17. Système selon une ou plusieurs des revendications 11 à 16, **caractérisé par** une caméra vidéo, de préférence une caméra à balayage de lignes (CCD) (16), faisant office de dispositif de détection des tailles des ombres de masquage.

18. Système selon une ou plusieurs des revendications 11 à 17, **caractérisé par** un dispositif d'élaboration de valeur moyenne pour des signaux de mesure correspondant aux tailles des ombres de masquage.

19. Système selon une ou plusieurs des revendications 11 à 18, **caractérisé par** un canal de roulage (20) faisant office de dispositif de mise en rotation pour les articles, qui est formé, d'une part, par un dispositif de transport (20a), mis en mouvement, pour les articles et, d'autre part, par une surface (20b) immobile ou déplacée à plus faible ou plus grande vitesse et positionnée à une distance plus petite que le diamètre des articles, et au moyen duquel l'article est transporté sous rotation.
